(19) Europäisches Patentamt
European Patent Office
Office européen des brevets

(11) EP 0 920 483 B1

(12) FASCICULE DE BREVET EUROPEEN

(45) Date de publication et mention de la délivrance du brevet:
**13.02.2002 Bulletin 2002/07**

(21) Numéro de dépôt: **97937629.0**

(22) Date de dépôt: **14.08.1997**

(51) Int Cl.⁷: **C09D 183/06**, C08K 5/00

(86) Numéro de dépôt international:
**PCT/FR97/01492**

(87) Numéro de publication internationale:
**WO 98/07798 (26.02.1998 Gazette 1998/08)**

(54) **COMPOSITIONS STABLES A BASE DE POLYORGANOSILOXANES A GROUPEMENTS FONCTIONNELS RETICULABLES ET LEUR UTILISATION POUR LA REALISATION DE REVETEMENTS ANTI-ADHERENTS**

AUF VERNETZBARE POLYORGANOSILOXAN BASIERTE STABILE ZUSAMMENSETZUNGEN UND DEREN VERWENDUNG FÄR BESCHICHTUNGEN

STABLE POLYORGANOSILOXANE BASED COMPOSITIONS WITH CROSS-LINKABLE FUNCTIONAL GROUPS AND THEIR USE FOR PRODUCING ANTIADHESIVE COATING

(84) Etats contractants désignés:
**AT BE CH DE DK ES FI FR GB GR IE IT LI LU MC NL PT SE**
Etats d'extension désignés:
**RO SI**

(30) Priorité: **21.08.1996 FR 9610330**

(43) Date de publication de la demande:
**09.06.1999 Bulletin 1999/23**

(73) Titulaire: **RHODIA CHIMIE**
**92408 Courbevoie Cédex (FR)**

(72) Inventeurs:
- **PRIOU, Christian**
  **F-69100 Villeurbanne (FR)**
- **SOLDAT, André**
  **F-69008 Lyon (FR)**
- **KERR, Stuart, R., III**
  **Rock Hill, SC 29732 (US)**
- **BEATY, Reeshemah**
  **Chester, SC 29706 (US)**

(56) Documents cités:
**EP-A- 0 576 247**
**EP-A- 0 697 449**
**EP-A- 0 703 236**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 920 483 B1

Printed by Jouve, 75001 PARIS (FR)

## Description

La présente invention a pour objet des compositions stables à base de polyorganosiloxanes à groupements fonctionnels réticulables par voie cationique, leur utilisation pour la réalisation de revêtements anti-adhérents ou anti-adhésifs et les articles constitués d'un support solide dont une surface au moins est rendue anti-adhérente ou anti-adhésive par revêtement à l'aide desdits polyorganosiloxanes fonctionnels réticulés par activation photochimique, thermique et/ou sous faisceau d'électrons.

Il est connu de mettre en oeuvre pour la réalisation de revêtements anti-adhésifs, des compositions à base d'un polyorganosiloxane à groupements fonctionnels (du type époxy, vinyléther, etc.) auquel est additionné un sel d'onium amorceur cationique pour la réticulation (brevets US-A-4.450.360 ; US-A-4.576.999; US-A-4.640.967).

Il a été constaté que les meilleurs résultats sont obtenus avec des sels d'onium dont l'anion est $SbF_6^-$. Toutefois, les amorceurs contenant ce type d'anion sont difficiles à manipuler et présentent des risques importants de toxicité.

D'autre part, les compositions à base de polyorganosiloxanes réticulables sous U.V. de l'art antérieur peuvent présenter des problèmes de stabilité et de vieillissement en présence ou non de lumière. Notamment, il a été constaté qu'en présence de photoamorceur dans lesdites compositions conditionnées sous forme liquide, des réactions non contrôlées de polymérisation des polyorganosiloxanes avaient lieu dans le milieu sans irradiation sous U.V..

De plus, lorsque l'on utilise un photoamorceur sous conditionnement liquide, celui-ci a tendance à se dégrader, notamment en libérant des traces d'acides, et présente des performances amoindries si on l'utilise après une longue période de stockage.

La Demanderesse a trouvé et mis au point de nouvelles compositions à base d'au moins un polyorganosiloxane à groupements fonctionnels réticulables ne présentant quasiment pas les inconvénients des compositions de l'art antérieur. Notamment, ces nouvelles compositions à base de polyorganosiloxane(s) comportent un agent aminé stabilisant capable de neutraliser les traces d'acides et présentent une stabilité très améliorée au stockage et lors de leur mise en oeuvre. Ainsi, les réactions non contrôlées de polymérisation au sein des compositions sont quasiment éliminées, sans toutefois diminuer l'aptitude aux dites compositions à réticuler dans des conditions contrôlées.

Les nouvelles compositions en accord avec l'invention sont à base :

- d'au moins un polyorganosiloxane à groupements fonctionnels réticulables par voie cationique,
- un système amorceur de durcissement sous radiation, en particulier U.V.,
- et un agent aminé ayant des propriétés améliorant sensiblement la stabilité au stockage et à la mise en oeuvre du mélange du ou des polyorganosiloxanes avec le photoamorceur.

Les systèmes amorceurs de durcissement utilisés dans les compositions selon l'invention sont avantageusement des sels d'onium. En particulier, les sels d'onium sont choisis parmi au moins un élément des groupes 15 à 17 de la classification périodique (Chem. & Eng. News, vol 63, N° 5, 26 du 4 Février 1985) dont l'entité cationique et l'entité anionique sont définies ci-dessous. Les systèmes amorceurs de durcissement utilisés dans le cadre de l'invention comprennent un ou plusieurs sels d'onium.

L'entité cationique du sel d'onium est choisie parmi :

(1) les sels d'onium de formule $[(R_1)_n\text{- A -}(R_2)_m]^+$ (I)
dans laquelle :

- A représente un élément des groupes 15 à 17, tel que I, S, Se, P et N,
- le symbole $R_1$ représente un radical aryle carbocyclique ou hétérocyclique en $C_6$-$C_{20}$, de préférence phényle, tolyle ou toluyle, ledit radical hétérocyclique pouvant contenir au moins un hétéroélément, de préférence de l'azote et/ou du soufre,
- le symbole $R_2$ représente $R_1$, un radical alkyle, un alkényle linéaire ou ramifié contenant 1 à 30 atomes de carbone,
- lesdits radicaux $R_1$ et $R_2$ étant éventuellement substitués par un groupement alcoxy contenant entre 1 à 25 atomes de carbone, un groupement alkyle contenant 1 à 25 atomes de carbone, un groupe nitro, un groupe chloro, un groupe bromo, un groupe cyano, un groupe carboxy et/ou un groupe mercapto,
- n est un nombre entier allant de 1 à v+1, v étant la valence de l'élément A,
- m est un nombre entier allant de 0 à v-1 avec n+m = v+1.

(2) les sels d'oxoisothiochromanium de formule :

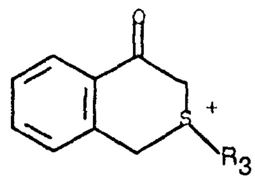

dans laquelle le symbole $R_3$ représente un radical alkyle linéaire ou ramifié, contenant 1 à 20 atomes de carbone, un radical cyloalkyle linéaire ou ramifié contenant 1 à 20 atomes de carbone, ou un radical aryle.

A titre d'exemple, les sels d'oxoisothiochromanium utilisables sont ceux notamment décrits dans la demande de brevet WO A90/11303 (publié le 4 octobre 1990). Comme sels d'oxoisothiochromanium qui conviennent particulièrement bien, on citera en particulier le sel de sulfonium de 2-éthyl-4-oxoiso-thiochromanium ou de 2-dodécyl- 4-oxoisothiochromanium.

L'entité anionique dudit sel d'onium est choisie parmi le groupe constitué de $SbF_6^-$, $PF_6$, $AsF_6^-$, $CF_3SO_3^-$, $BF_4^-$, $BCl_4^-$, $B(O_3SCF_3)_4^-$, $B(O_3SC_2F_5)_4^-$, $B(O_3SC_4F_9)_4^-$. Toutefois, d'autres entités anioniques peuvent être également utilisées telles que celles décrites dans la demande de brevet EP-A 697 449 (page 4, ligne 28 à 37).

En outre, dans le cas d'une entité anionique borate, celle-ci peut être choisie au sein du groupe constitué des entités de formule $[B\,X_a\,(R_4)_b]^-$ (II), qui comprend d'ailleurs $BF_4^-$, $BCl_4^-$, dans laquelle :

- a est un nombre entier compris entre 0 et 4,
- b est un nombre entier compris entre 0 et 4 avec a + b = 4,
- les symboles X représentent :
  - un atome d'halogène, de préférence le chlore ou le fluor,
  - une fonction OH avec a = 0 à 2,
- les symboles $R_4$ sont identiques ou différents et représentent :
  - un radical phényle substitué par au moins un groupement électroattracteur, de préférence $CF_3$, $OCF_3$, $NO_2$, CN, ou par au moins 2 atomes d'halogène, de préférence le fluor,
  - un radical aryle contenant au moins deux noyaux aromatiques tels que biphényle, naphtyle, éventuellement substitué par au moins un élément ou un groupement électroattracteur, de préférence $CF_3$, $NO_2$, CN, ou un atome d'halogène, en particulier le fluor.

Avantageusement, l'entité anionique borate est choisie parmi les anions suivants :
$[B(C_6F_5)_4]^-$ $[B(C_6H_4CF_3)_4]^-$ $[B(C_6H_3(CF_3)_2)_4]^-$
$[(C_6F_5)_2B\,F_2]^-$ $[B(C_6H_4OCF_3)_4]^-$ $[B(C_6H_3F_2)_4]^-$

Les sels d'onium de formule I sont décrits dans de nombreux documents, notamment dans les brevets US-A-4.026.705; US-A-4.069.056; US-A-4.136.102; US-A-4.173.476. En particulier, les cations mis en oeuvre dans le cadre de l'invention sont les suivants :
$[(\Phi)_2\,I]^+$ $[C_8H_{17}\text{-O-}\Phi\text{-I-}\Phi]^+$
$[C_{12}H_{25}\text{-}\Phi\text{-I -}\Phi]^+$ $[(C_8H_{17}\text{-O-}\Phi)_2I]^+$
$[(\Phi)_3S]^+$ $[(\Phi)_2\text{-S -}\Phi\text{-O-}C_8H_{17}]^+$
$[\Phi\text{-S-}\Phi\text{-S -}(\Phi)_2]^+$ $[(C_{12}H_{25}\text{-}\Phi)_2I]^+$
$[CH_3\text{-}\Phi\text{-I-}\Phi\text{-}CH(CH_3)_2]^+$ $[CH_3\text{-}\Phi\text{-I-}\Phi\text{-}CH_3]^+$
et $[(\Phi)_2S\text{-}\Phi\text{-S-}\Phi\text{-S}(\Phi)_2]^{+2}$

Conformément à l'invention, les amorceurs mis en oeuvre avantageusement sont les borates d'onium suivants :
$[(\Phi\text{-}CH_3)_2\,I]^+$, $[B(C_6F_5)_4]^-$, $[(\Phi)_2\,I]^+$, $[B(C_6F_5)_4]^-$,
$[C_{12}H_{25}\text{-}\Phi\text{- I - }\Phi]^+$, $[B(C_6F_5)_4]^-$, $[(C_8H_{17}\text{-O-}\Phi\text{-I-}\Phi]^+$, $[B(C_6F_5)_4]^-$,
$[(C_8H_{17}\text{-O-}\Phi)_2\,I]^+$, $[B(C_6F_5)_4]^-$, $[(\Phi)_2\,I]^+$, $[B(C_6H_3(CF_3)_2)_4]^-$,
$[(\Phi)_2S\text{-}\Phi\text{-O-}C_8H_{17}]^+$, $[B(C_6H_4CF_3)_4]^-$, $[(C_{12}H_{25}\text{-}\Phi)_2I]^+$, $[B(C_6F_5)_4]^-$,
$[CH_3\text{-}\Phi\text{-I-}\Phi\text{- }CH(CH_3)_2]^+$, $[B(C_6F_5)_4]^-$, $[(\Phi)_3\,S]^+$, $[B(C_6F_5)_4]^-$,
$[CH_3\text{-}\Phi\text{-I-}\Phi\text{-}CH(CH_3)_2]^+$, $[B(C_6H_4OCF_3)_4]^-$, et
$2[B(C_6F_5)_4]^-$, $[(\Phi)_2S\text{-}\Phi\text{-S-}\Phi\text{-S}(\Phi)_2]^{+2}$

Les borates d'onium utilisés dans les compositions selon la présente invention peuvent être préparés par réaction d'échange entre un sel de l'entité cationique avec un sel de métal alcalin (par exemple, sodium, lithium, potassium) de l'entité anionique. Le sel de l'entité cationique peut être par exemple un halogénure tel qu'un chlorure ou un iodure tandis que le métal alcalin du sel de l'entité anionique peut être du sodium, lithium ou du potassium.

Les conditions opératoires (quantités respectives de réactifs, choix des solvants, durée, température, agitation) sont connues et à la portée de l'homme de l'art; celles-ci doivent permettre de récupérer le sel amorceur recherché sous forme solide par filtration du précipité formé, ou sous forme huileuse par extraction par un solvant approprié.

Les sels de métal alcalin de l'entité anionique peuvent être préparés de manière connue, par réaction d'échange entre un composé halogénoboré et un composé organométallique (magnésien, lithien, stannique) portant les groupements hydrocarbonés désirés, en quantité stoechiométrique, ladite réaction peut être suivie éventuellement d'une hydrolyse à l'aide d'une solution aqueuse d'halogénure de métal alcalin; ce type de synthèse est par exemple décrit dans "J. of organometallic Chemistry" vol 178, p.1-4, 1979; "J.A.C.S" 82, 1960, 5298; "Anal. Chem. Acta" 44, 1969, p.175-183; brevets US-A- 4.139.681 et DE-A-2.901.367; "Zh. Org. Khim." Vol.25, N°5-p.1099-1102; 05/1989.

Le photoamorceur se présente généralement sous forme solide (poudre) et est généralement mis sous forme de solution dans un solvant ou diluant. Les proportions pondérales entre le ou les photoamorceurs, d'une part, et le solvant, d'autre part, sont comprises entre 0.1 et 99 parties pour 100 parties de solvant et de préférence de 10 à 50 parties.

La solution est ensuite utilisée pour préparer un bain avec le ou les polyorganosiloxanes à groupements fonctionnels réticulables par voie cationique, telle que la concentration du photoamorceur ou des photoamorceurs présents soit comprise entre 0.05 et 2% en poids dans ledit bain, et de préférence entre 0.2 et 0.6%.

Les solvants utilisables pour le photoamorceur sont très nombreux et variés et sont choisis selon le photoamorceur utilisé et les autres constituants de la composition de l'invention.

En général, les solvants peuvent être des alcools, des esters, des éthers, des cétones, des composés chlorés ou des nitriles.

Les alcools couramment employés sont le para-tolyl-éthanol, l'isopropyl benzyl alcool, l'alcool benzylique, le méthanol, l'éthanol, le propanol, l'isopropanol et le butanol. Les éthers communément usités sont le méthoxy-2 éthanol, l'éthoxy-2-éthanol, le diéthylène glycol, le polyéthylène glycol 200. Les esters usuels sont le dibutylmaléate, diméthyléthylmalonate, salycilate de méthyle, dioctyladipate, tartrate de butyle, lactate d'éthyle, lactate de n-butyle, lactate d'isopropyl. D'autres solvants utilisables pour le bain du photoamorceur et entrant dans les autres catégories de solvants citées ci-dessus sont l'acétonitrile, le benzonitrile, l'acétone, le cyclohexanone, le tétrahydrofurane, le dichlorométhane, et le chlorobenzène.

En outre, parmi les solvants utilisables pour solubiliser le ou les photoamorceurs, certains types de solvants organiques donneurs de protons et à caractère aromatique ainsi que certains types d'esters d'acides carboxyliques hydroxylés ont pour propriétés non seulement de solubiliser les photoamorceurs mais également d'améliorer significativement leurs performances de réactivité et de cinétique. Ces deux types de solvants, appelés diluants réactifs, sont décrits ci-dessous et sont avantageusement utilisés comme solvant pour le(s) photoamorceur(s).

Le solvant organique donneur de protons et à caractère aromatique est formé par au moins un alcool benzylique de formule générale suivante (III):

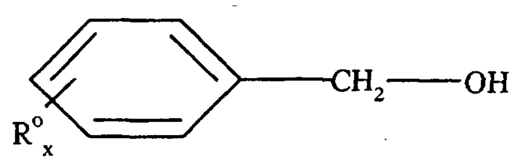

dans laquelle :

- les groupements $R^0$ sont identiques ou différents et représentent un groupement électrodonneur ou électroaccepteur choisi parmi les alkyles linéaires ou ramifiés contenant 1 à 12 atomes de carbone, les alcoxyles linéaires ou ramifiés contenant 1 à 12 atomes de carbone, les cycloalkyles, les cycloalcoxyles, les aryles, éventuellement substitués de préférence par des halogènes, ou des radicaux tels que par exemple $NO_2$,
- x est entier compris entre 0 et 5.

De préférence, R° représente un groupement méthyle, t-butyle ou isopropyle.

Le second type de solvant dans lequel est préférentiellement solubilisé le photoamorceur est choisi parmi les esters d'acides carboxyliques hydroxylés, liquides à température ambiante (23°C), de formule générale :

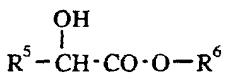 (IV)

dans laquelle :

- les symboles $R_5$ et $R_6$ sont identiques ou différents et représentent :

  · un radical alkyle, linéaire ou ramifié en $C_1$-$C_{10}$, éventuellement substitué par un groupe alkoxy linéaire ou ramifié en $C_1$-$C_4$,
  · un radical cycloalkyle en $C_4$-$C_{10}$, éventuellement substitué par un ou plusieurs groupe(s) alkyle(s) ou alkoxy linéaire(s) ou ramifié(s) en $C_1$-$C_4$,
  · un radical aryle en $C_6$-$C_{12}$, éventuellement substitué par un ou plusieurs groupe(s) alkyle(s) ou alkoxy linéaire (s) ou ramifié(s) en $C_1$-$C_4$, et/ou
  · un radical aralkyle ou aroxyalkyle où la partie aryle est un groupe en $C_6$-$C_{12}$ éventuellement substitué par un ou plusieurs groupe(s) alkyle(s) ou alkoxy linéaire(s) ou ramifié(s) en $C_1$-$C_4$, et la partie alkyle est un groupe linéaire ou ramifié en $C_1$-$C_4$,
  - le symbole $R_5$ pouvant en outre représenter :

    · un radical alkoxy, linéaire ou ramifié en $C_1$-$C_{15}$, et/ou
    · un radical cycloalkyloxy en $C_4$-$C_{10}$, éventuellement substitué par un ou plusieurs groupe(s) alkyle(s) ou alkoxy linéaire(s) ou ramifié(s) en $C_1$-$C_4$.

Ces esters d'acides carboxyliques hydroxylés, en tant que solvant, ont des propriétés permettant d'améliorer significativement les performances de réactivité et de cinétique des photoamorceurs, ainsi que les propriétés finales des revêtements réticulés obtenus.

En particulier, les résultats les plus intéressants sont obtenus avec ce type de solvant formé par au moins un ester d'acide carboxylique hydroxylé de formule générale (IV) dans laquelle:

- $R_5$ représente un radical alkyle linéaire en $C_1$-$C_3$, et
- R6 représente un radical alkyle linéaire ou ramifié en $C_2$-$C_6$.

De manière plus préférentielle, le solvant utilisé est formé par au moins un ester de l'acide lactique de formule générale (IV) dans laquelle $R_5$ représente un radical méthyle, et $R_6$ représente un radical alkyle linéaire en $C_3$-$C_5$. Dans ce cas, les proportions pondérales de photoamorceurs sont de 10 à 50 parties pour 100 parties de solvant. Cette famille préférée de solvants a, en outre, l'avantage d'être très économique, peu toxique, facilement manipulable et compatible avec les sels amorceurs connus.

Les polyorganosiloxanes réticulables par voie cationique entrant dans la composition de l'invention présentent des groupements fonctionnels de type époxy et/ou vinyléther.

Lesdits polyorganosiloxanes sont linéaires ou sensiblement linéaires et constitués de motifs de formule (V) et terminés par des motifs de formule (VI) ou cycliques constitués de motifs de formule (III) représentées ci-dessous :

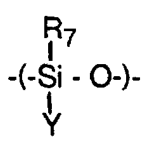 (V)

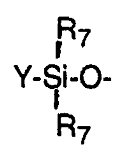 (VI)

dans lesquelles :

- les symboles $R_7$ sont semblables ou différents et représentent:

  · un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
  · un radical cycloalkyle contenant entre 5 et 8 atomes de carbone cycliques, éventuellement substitué,
  · un radical aryle contenant entre 6 et 12 atomes de carbone pouvant être substitué, de préférence phényle ou

dichlorophényle,

- une partie aralkyle ayant une partie alkyle contenant entre 1 et 4 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,

- les symboles Y sont semblables ou différents et représentent :

  - le groupement $R_7$, un radical hydrogène et/ou
  - un groupement organofonctionnel réticulable par voie cationique, de préférence un groupement époxyfonctionnel et/ou vinyloxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
  - et l'un au moins des symboles Y représentant un groupement organique fonctionnel réticulable par voie cationique.

De préférence, au moins un des symboles $R_7$ des polyorganosyloxanes utilisés dans les compositions selon l'invention représente un radical phényle, xylile, tolyle ou dichlorophényle.
De plus, il est avantageux qu'au moins 60% molaire des radicaux $R_7$ des polyorganosiloxanes utilisés dans les compositions selon l'invention soient des radicaux méthyles.
Selon une variante préférée de l'invention, 1 à 50%, de préférence 5 à 25% des atomes de silicium du polyorganosiloxane porte 1 groupement fonctionnel réticulable.
Les groupements **Y** époxyfonctionnels sont généralement choisis parmi:

**a)** 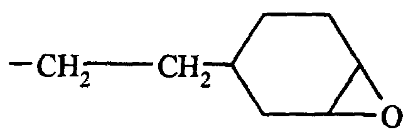

**b)** 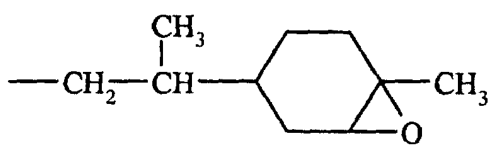

**c)** 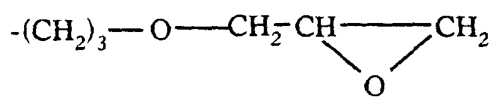

et/ou

**d)** 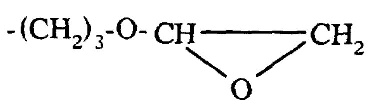

De préférence, les groupements fonctionnels correspondent à **a)**.
En outre, les groupements **Y** vinyloxyfonctionnels sont généralement choisis parmi:

- $(CH_2)_3$-O-CH=$CH_2$
- -O-$(CH_2)_4$-O-CH=$CH_2$
- et/ou $(CH_2)_3$-O-$R_8$-O-CH=$CH_2$.

  dans laquelle $R_8$ est :

- un alkylène linéaire ou ramifié en $C_1$-$C_{12}$ pouvant être substitué,

- un arylène en $C_6$-$C_{12}$, de préférence phénylène, pouvant être substitué, de préférence par 1 à 3 groupements alkyles en $C_1$-$C_6$.

Plus particulièrement, les polyorganosiloxanes utilisés dans les compositions selon l'invention sont de formule :

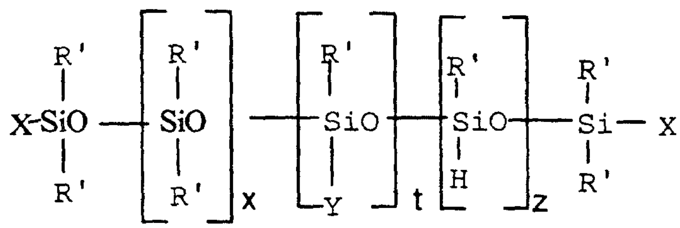

(VII)

dans laquelle :

- les symboles R' ont la même signification que $R_7$ précédemment pour les formules (V) et (VI), et de préférence, quand R' est un radical alkyle linéaire ou ramifié, celui-ci contenant 1 à 4 atomes de carbone,
- les symboles X sont identiques ou différents et représentent un radical monovalent choisi parmi Y, H et/ou OH,
- x est un nombre entier ou fractionnaire variant de 20 à 150, de préférence 30 à 100,
- t est un nombre entier ou fractionnaire variant de 3 à 9, de préférence 6 à 9, et
- z est un nombre entier ou fractionnaire variant de 0 à 5; de préférence 0 à 2.

Les polyorganosiloxanes époxyfonctionnels peuvent être préparés par réaction d'hydrosilylation entre des huiles à motifs Si-H et des composés époxyfonctionnels tels que 1,2-époxy-4-vinyl-cyclohexane, allylglycidyléther.
Les polyorganosiloxanes vinyloxyfonctionnels peuvent être préparés par réaction d'hydrosilylation entre des huiles à motifs Si-H et des composés vinyloxyfonctionnels tels que l'allylvinyléther, l'allyl-vinyloxyéthoxybenzène.
Les polyorganosiloxanes époxyfonctionnels ou vinyloxyfonctionnels utilisés dans le cadre de l'invention se présentent généralement sous forme de fluides présentant une viscosité dynamique à 25°C de 10 à 10.000 $mm^2/s$, et de préférence de 100 à 600 $mm^2/s$.
La viscosité dynamique à 25°C, de toutes les silicones considérées dans la présente description peut être mesurée à l'aide d'un viscosimètre BROOKFIELD, selon la norme AFNOR NFT 76 102 de février 1972).
L'agent aminé stabilisant utilisé dans les compositions selon l'invention comporte au moins une amine dont le point d'ébullition est supérieur à 150°C et de préférence supérieur à 200°C. Cette amine peut être une amine secondaire ou une amine tertiaire.
L'amine utilisable dans les compositions de l'invention est :

(1) une amine secondaire ou tertiaire de formule (VIII) :

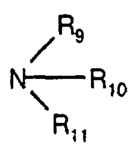

dans laquelle $R_9$, $R_{10}$, et $R_{11}$ sont identiques et/ou différents et choisis parmi le groupe constitué de :

- un radical monovalent alkyle, alkoxy ou alkylène, linéaire ou ramifié, contenant entre 1 à 12 atomes de carbone, et pouvant contenir et/ou être substitué par au moins un hétéroatome, de préférence un atome d'oxygène, de soufre ou d'azote (par exemple, pour former une fonction réactive telle qu'un groupement époxy, cétone ou hydroxyle),
- un radical monovalent cycloalkyle contenant entre 3 et 9 atomes de carbone et pouvant contenir el/ou être substitué par au moins un hétéroatome, de préférence un atome d'oxygène, de soufre ou d'azote (par exemple, une fonction réactive telle qu'un groupement époxy, cétone ou hydroxyle), et
- un radical hydrogène.

(2) ou une amine cyclique encombrée stériquement de formule (IX):

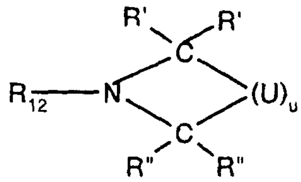

dans laquelle :

- $R_{12}$ correspond à $R_9$,
- R' et R" sont identiques ou différents et correspondent à un radical alkyle linéaire ou ramifié contenant entre 1 et 12 atomes de carbone, et pouvant contenir ou être substitué par au moins un hétéroatome, de préférence un atome d'oxygène, de soufre ou d'azote (par exemple, pour former une fonction réactive telle qu'un groupement époxy, cétone ou hydroxyle),
- U est une valence libre ou un radical méthylène, et u est compris entre 1 et 9 pour former un cycle pouvant :
    - contenir au moins un hétéroatome, de préférence un atome d'oxygène, de soufre ou d'azote, et/ou
    - être substitué par au moins un hétéroatome, un radical alkyle linéaire ou ramifié contenant 1 à 4 atomes, l'hétéroatome étant de préférence un
    - atome d'oxygène, de soufre ou d'azote (par exemple, pour former une
    - fonction réactive telle qu'un groupement époxy, cétone ou hydroxyle).

(3) ou une amine constituée de motifs de formule (VIII) et (IX) reliés entre eux par au moins un radical organique, saturé ou non saturé, au moins divalent $R_{13}$, pouvant contenir et/ou être substitué par un hétéroatome.

A titre d'exemples non limitatifs, le radical $R_{13}$ peut être choisi parmi :

- ♦ les radicaux alkylènes linéaires ou ramifiés, ayant 2 à 18 atomes de carbone;
- ♦ les radicaux alkylène-carbonyle dont la partie alkylène linéaire ou ramifiée, comporte 2 à 20 atomes de carbone;
- ♦ les radicaux alkylène-cyclohexylène dont la partie alkylène linéaire ou ramifiée, comporte 2 à 12 atomes de carbone et la partie cyclohexylène comporte un groupement OH et éventuellement 1 ou 2 radicaux alkyles ayant 1 à 4 atomes de carbone;
- ♦ les radicaux de formule $-R_{14}$ -O- $R_{14}$ dans laquelle les radicaux $R_{14}$ identiques ou différents représentent des radicaux alkylènes ayant 1 à 12 atomes de carbone;
- ♦ les radicaux de formule $-R_{14}$ -O- R14 dans laquelle les radicaux $R_{14}$ ont les significations indiquées précédemment et l'un d'entre eux ou les deux sont substitués par un ou deux groupement(s) -OH;
- ♦ les radicaux de formule - O-CO- $R_{14}$ dans laquelle le radical $R_{14}$ a la signification indiquée précédemment;
- ♦ les radicaux de formule $-R_{14}$ -COO- $R_{14}$ dans laquelle les radicaux $R_{14}$ ont les significations indiquées précédemment;
- ♦ les radicaux de formule $-R_{15}$ -O- $R_{16}$ -O-CO- $R_{15}$ dans laquelle les radicaux $R_{15}$ et $R_{16}$ identiques ou différents, représentent des radicaux alkylènes ayant 2 à 12 atomes de carbone et le radical $R_{16}$ est éventuellement substitué par un radical hydroxyle;
- ♦ un groupement trivalent de formule :

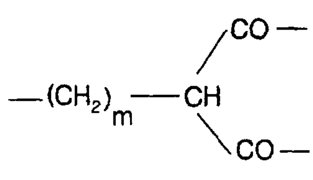

où m représente un nombre de 2 à 20;
- ♦ un groupement trivalent de formule :

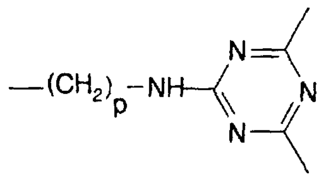

où p représente un nombre de 2 à 20.

De préférence, les amines encombrées stériquement en accord avec les compositions selon l'invention comporte en $\alpha$ de l'atome d'azote des groupements alkyles comportant 1 à 4 atomes de carbone, et de préférence des groupements méthyles. Selon une autre variante préférée de l'invention, les amines encombrées stériquement contiennent des motifs pypéridinyles.

Il est à noter que la plupart des amines encombrées utilisées comme agent de stabilité à la lumière (type "HALS") se révèlent être de très bonnes candidates pour satisfaire aux exigences des agents stabilisants utilisés dans le cadre de l'invention, bien que leur propriété intrinsèque de stabilité à la lumière n'ait pas de relation directe avec le mode d'action des agents aminés stabilisants des compositions selon l'invention. A ce sujet, il est possible d'utiliser les différents types d'amines encombrées des documents EP 162 524 et EP 263 561.

De nombreux types d'amines encombrées disponibles dans l'industrie ont donné de bons résultats, et notamment :

- les produits TINUVIN commercialisés par la société CIBA GEIGY, en particulier les produits TINUVIN 144 et TINUVIN 292, respectivement de formules (X) et (XI),
- les produits CYAGARD commercialisés par CYTEC, en particulier le produit CYAGARD UV 1164L, et
- les produits SANDUVAR, en particulier le produit SANDUVAR 3055, de formule (XII) commercialisé par la société SANDOZ.

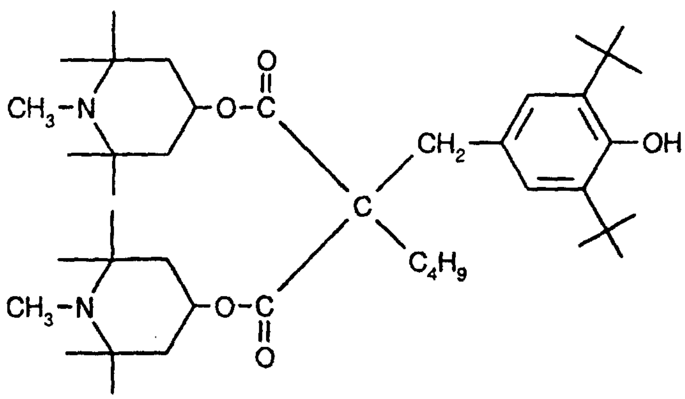

(X);

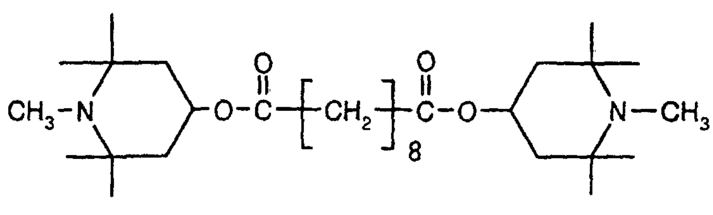

(XI);

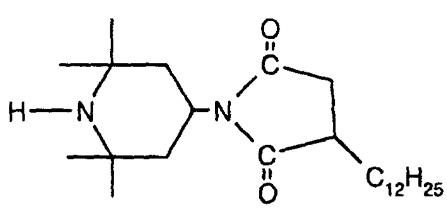

(XII).

D'autres types d'amines répondant aux formules (VIII) et (IX) sont également de bonnes candidates pour être utilisées dans les compositions de l'invention; à titre d'exemple, la structure de certaines de ces amines est donnée ci-dessous :

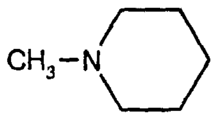
(XIII) ;
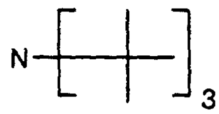
(XIV);
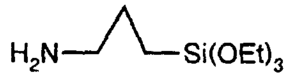
(XV)
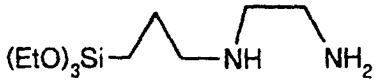
(XVI)

Le pourcentage d'agent aminé généralement utilisé en poids par rapport au poids total de l'huile est compris entre 1 et 1.000 ppm et de préférence entre 10 et 100 ppm. Dans le cas d'agent aminé de type HALS, la quantité est de l'ordre de 20 à100 ppm.

Les compositions selon l'invention peuvent comporter en outre d'autres ingrédients tels que des modulateurs d'adhérence permettant d'augmenter ou de diminuer les forces d'adhérence obtenues à partir du polyorganosiloxane seul (résines ou polymères linéaires silicones portant des fonctions vinyle, époxy, vinyléther, alcool), des pigments, des photosensibilisateurs, des agents fongicides, bactéricides et anti-microbiens, des inhibiteurs de corrosion, etc..

Les compositions selon l'invention sont utiles dans le domaine des revêtements anti-adhérents sur les matériaux cellulosiques, les films, les peintures, l'encapsulation de composants électriques et électroniques, les revêtements pour textiles, ainsi que pour le gainage de fibres optiques.

Elles sont tout particulièrement intéressantes lorsqu'elles sont utilisées sous forme liquide pour rendre non-adhérent un matériau tel que des feuilles métalliques, du verre, des matières plastiques ou du papier, à d'autres matériaux auxquels il adhérerait normalement.

Les compositions en accord avec l'invention présentent avantageusement une viscosité ne dépassant pas 5.000 mPa.s, de préférence ne dépassant pas 4.000 mPa.s à 25°C. A titre de variante, on préférera les compositions dont la viscosité du bain est comprise entre 200 et 1.000 mPa.s à 25°C.

L'invention vise également un procédé permettant de rendre non-adhérent la surface d'un premier article (par exemple des feuilles) au contact de la surface d'un second article, la surface du premier article étant normalement adhérente à la surface du second article. Ce procédé de préparation d'article à surface non-adhérente comprend les étapes suivantes :

a) appliquer une quantité de la composition selon l'invention, comprise généralement entre 0,1 et 5 g par $m^2$ de la surface dudit article,

b) réticuler la composition par apport d'énergie dont au moins une partie, de préférence la totalité, est fournie par un rayonnement U.V..

Le rayonnement U.V. utilisé présente une longueur d'onde comprise entre 200 et 400 nanomètres. La durée d'irradiation peut être courte et elle est généralement inférieure à 1 seconde et est de l'ordre de quelques centièmes de seconde pour les très faibles épaisseurs de compositions déposées sur les surfaces. La réticulation s'effectue avantageusement en l'absence de tout chauffage. Toutefois, un chauffage entre 25 et 100°C n'est pas exclu de l'invention.

De plus, on peut régler le temps de durcissement notamment, par le nombre de lampes U.V. utilisées, par la durée d'exposition aux U.V. et par la distance entre la composition et la lampe U.V..

Les compositions sans solvant, c'est-à-dire non diluées, sont appliquées à l'aide de dispositifs aptes à déposer, d'une façon uniforme, de faibles quantités de liquides. On peut utiliser à cet effet par exemple le dispositif nommé "Helio glissant" comportant en particulier deux cylindres superposés; le rôle du cylindre placé le plus bas, plongeant dans le bac d'enduction où se trouve la composition, est d'imprégner en une couche très mince le cylindre placé le plus haut, le rôle de ce dernier est alors de déposer sur le papier les quantités désirées de composition dont il est imprégné; un tel dosage est obtenu par réglage de la vitesse respective des deux cylindres qui tournent en sens inverse l'un de l'autre.

Les quantités de compositions déposées sur les supports sont variables et s'échelonnent le plus souvent entre 0,1 et 5 g par $m^2$ de surface traitée. Ces quantités dépendent de la nature des supports et des propriétés anti-adhérentes recherchées. Elles sont plus souvent comprises entre 0,5 et 3 $g/m^2$ pour des supports non poreux.

La présente invention a également pour objet les articles (feuilles par exemple) constitués d'un matériau

solide (métal, verre, matière plastique, papier, etc.) dont une surface au moins est revêtue de la composition ci-dessus décrite photoréticulée ou réticulée sous faisceau d'électrons.

Les articles, matériaux ou supports ainsi enduits peuvent être ultérieurement mis en contact avec d'autres matériaux adhésifs tels que par exemple certains matériaux de type caoutchouc ou acrylique. Après contact par pression, les matériaux adhésifs sont aisément détachables de l'article enduit de la composition photoréticulée.

## EXEMPLES

Les exemples suivants sont donnés à titre illustratif et ne peuvent être considérés comme une limite du domaine et de l'esprit de l'invention.

I. Constituants des compositions

Les polyorganosiloxanes fonctionnalisés mis en oeuvre dans les exemples sont des (1,2-époxy-4-éthyl-cyclohexyl)polydiméthylsiloxanes de formule (XVII) dans laquelle a et b ont respectivement pour valeurs moyennes 7 et 73.

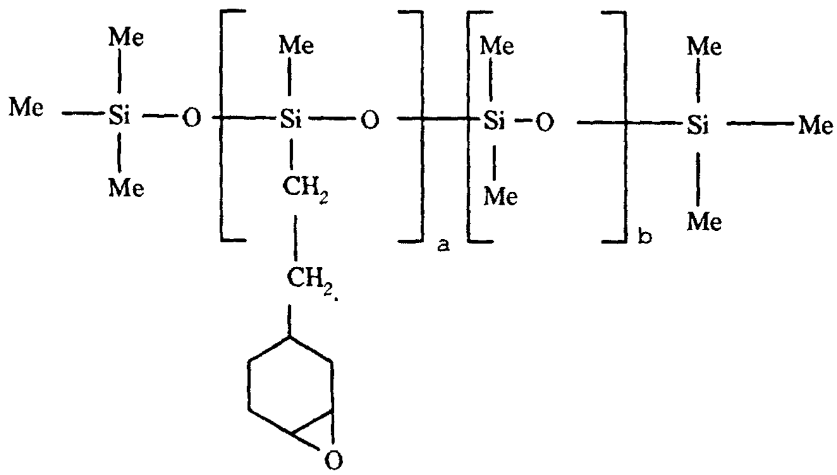

(XVII)

Le photoamorceur utilisé dans les exemples est un borate d'onium; le tétrakis (pentafluorophényl) borate de ditolyliodonium de formule :

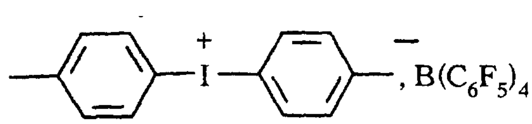

L'entité cationique de ce borate d'onium ainsi que le borate d'onium sont préparés selon la méthodologie générale décrite dans les demandes de brevets européens N° 562 922 et 562 897.

L'entité anionique borate est préparée selon le protocole ci-dessous.

Le bromopentafluorobenzène (21,3 g, 0,086 mole) et l'éther isopropylique sont chargés, sous atmosphère inerte, dans un ballon de 500 ml équipé d'une agitation mécanique, d'un réfrigérant et d'une ampoule de coulée. Le mélange est agité et est refroidi à la température de - 78°C à l'aide d'un bain acétone + glace carbonique.

Le n-butyllithium en solution dans l'hexane (1,6 M, 52,3 ml, 0,97 éq) est chargé dans l'ampoule de coulée, puis est additionné en 10 minutes environ. Le mélange est ensuite laissé pendant 30 mn sous agitation à la température de 78°C.

L'ampoule de coulée est remplacée par une ampoule de coulée contenant le trichlorure de bore en solution dans l'hexane (1,0 M, 19 ml). Le trichlorure de bore est ajouté en 15 mn, puis le mélange réactionnel est laissé pendant 30 mn sous agitation à la température de - 78°C.

On laisse ensuite revenir à température ambiante le mélange en 1h environ. On ajoute alors une solution aqueuse saturée en KCl (100 ml). Le mélange est alors biphasique et homogène. L'éther isopropylique est distillé. Le $KB(C_6F_5)_4$ précipite en fin de distillation. Il est récupéré par filtration, puis il est lavé avec une solution saturée en KCl (100 ml) avant d'être séché sous vide à la température de 35°C.

On obtient ainsi un produit titrant 97% en produit attendu, avec un rendement de 99%.

Le système photoamorceur est préparé par mise en solution du borate d'onium (éventuellement complété par une partie du polyorganosiloxane utilisé dans les compositions), dans du lactate de n-butyle.

L'agent aminé stabilisant est le trioctylamine pour compositions des exemples 3 à 4 et le TINUVIN 292 pour les compositions des exemples 5, 6, 9, et 10.

II. Préparations de compositions selon l'invention

Exemple 1

Une solution de borate d'onium à 20% en poids dans du lactate de n-butyle est préparée à $t_1 = 0$.

A 100 parties en poids de polyorganosiloxane de formule (XVII), on ajoute 2.5 parties en poids de la solution de borate d'onium à 20% au temps $t_2 = t1 + \varepsilon$ (c'est-à-dire juste après la préparation de la solution de borate d'onium).

On mélange par agitation manuelle pendant 1 mn.

Exemple 2

Une solution de borate d'onium à 20% en poids dans du lactate de n-butyle est préparée à $t_1 = 0$.

A 100 parties en poids de polyorganosiloxane de formule (XVII), on ajoute 2.5 parties en poids d'une solution de borate d'onium à 20% au temps $t_3 = t1 + 6$ mois (c'est-à-dire juste 6 mois après la préparation de la solution de borate d'onium).

On mélange par agitation manuelle pendant 1 mn.

Exemple 3

Une solution de borate d'onium à 20% en poids dans du lactate de n-butyle est préparée à $t_1 = 0$.

A 100 parties en poids de polyorganosiloxane de formule (XVII) dans lequel on a introduit auparavant 50 ppm de trioctylamine, on ajoute 2.5 parties en poids d'une solution de borate d'onium à 20% au temps $t_2 = t1 + \varepsilon$ (c'est-à-dire juste après la préparation de la solution de borate d'onium).

On mélange par agitation manuelle pendant 1 mn.

Exemple 4

Une solution de borate d'onium à 20% en poids dans du lactate de n-butyle est préparée à $t_1 = 0$.

A 100 parties en poids de polyorganosiloxane de formule (XVII) dans lequel on a introduit auparavant 50 ppm de trioctylamine, on ajoute 2.5 parties en poids d'une solution de borate d'onium à 20% au temps $t_3 = t1 + 6$ mois (c'est-à-dire juste 6 mois après la préparation de la solution de borate d'onium).

On mélange par agitation manuelle pendant 1 mn.

Example 5

Une solution de borate d'onium à 20% en poids dans du lactate de n-butyle est préparée à $t_1 = 0$.

A 100 parties en poids de polyorganosiloxane de formule (XVII) dans lequel on a introduit auparavant 50 ppm de TINUVIN™ 292, on ajoute 2.5 parties en poids d'une solution de borate d'onium à 20% au temps $t_2 = t1 + \varepsilon$ (c'est-à-dire juste après la préparation de la solution de borate d'onium).

On mélange par agitation manuelle pendant 1 mn.

Exemple 6

Une solution de borate d'onium à 20% en poids dans du lactate de n-butyle est préparée à $t_1 = 0$.

A 100 parties en poids de polyorganosiloxane de formule (XVII) dans lequel on a introduit auparavant 50 ppm de TINUVIN™ 292, on ajoute 2.5 parties en poids d'une solution de borate d'onium à 20% au temps $t_3 = t1 + 6$ mois (c'est-à-dire juste 6 mois après la préparation de la solution de borate d'onium).

On mélange par agitation manuelle pendant 1 mn.

Exemple 7 Les conditions sont identiques à celles de l'exemple 1, à l'exception des quantités de polyorganosiloxane de formule (XVII) et de solution de borate d'onium à 20%.

A un mélange de 90 parties en poids de polyorganosiloxane de formule (XVII) et 10 parties en poids de polyorganosiloxane de formule similaire à (XVII) dans laquelle a = 2 et b = 200, on ajoute 3 parties en poids de la

solution de borate d'onium.

On mélange par agitation manuelle pendant 1 mn.

Exemple 8

Les conditions sont identiques à celles de l'exemple 2, à l'exception des quantités de polyorganosiloxane de formule (XVII) et de solution de borate d'onium à 20%.

A un mélange de 90 parties en poids de polyorganosiloxane de formule (XVII) et 10 parties en poids de polyorganosiloxane de formule similaire à (XVII) dans laquelle a = 2 et b = 200, on ajoute 3 parties en poids de la solution de borate d'onium.

On mélange par agitation manuelle pendant 1 mn.

Exemple 9

Une solution de borate d'onium à 20% en poids dans du lactate de n-butyle est préparée à $t_1 = 0$.

A un mélange de 90 parties en poids de polyorganosiloxane de formule (XVII) et 10 parties en poids de polyorganosiloxane de formule similaire à (XVII) où a = 2 et b = 200 dans lequel on a introduit auparavant 50 ppm de TINUVIN™ 292, on ajoute 3 parties en poids d'une solution de borate d'onium à 20% au temps $t_2 = t1 + \varepsilon$ (c'est-à-dire juste après la préparation de la solution de borate d'onium).

On mélange par agitation manuelle pendant 1 mn.

Exemple 10

Une solution de borate d'onium à 20% en poids dans du lactate de n-butyle est préparée à $t_1 = 0$.

A un mélange de 90 parties en poids de polyorganosiloxane de formule (XVII) et 10 parties en poids de polyorganosiloxane de formule similaire à (XVII) où a =2 et b = 200 dans lequel on a introduit auparavant 50 ppm de TINUVIN™ 292, on ajoute 3 parties en poids d'une solution de borate d'onium à 20% au temps $t_3$ = t1 + 6 mois (c'est-à-dire juste 6 mois après la préparation de la solution de borate d'onium).

On mélange par agitation manuelle pendant 1 mn.

III. Tests

On mesure pour chaque composition préparée ci-dessus dans les exemples

- le temps de gel VNC,
- le temps de gel à 45°C au noir,
- le temps de gel sur film PET en couche mince.

Mesure du temps de gel VNC sous U.V.

Les tests de réactivité décrits dans les exemples suivants ont été effectués sur un appareil de mesure de point de gel VNC (vibrating needle curometer), commercialisé par la Société RAPRA Ltd, auquel un dispositif d'irradiation U.V. a été ajouté (générateur U.V. Ultracure 100 ss).

Au cours de la réticulation, l'aiguille du VNC plongée dans le mélange à étudier va rencontrer une résistance qui va se manifester par une diminution de la tension de sortie de l'appareil. Le temps de gel est le temps mesuré au maximum du point d'amortissement de la vibration.

Mesure du temps de gel à 45°C

La composition à tester est conditionnée dans un flacon en verre. Le flacon est fermé puis placé dans un bain marie à 45°C. L'ensemble est mis à l'abri de la lumière.

On examine visuellement au cours du temps et à l'abri de la lumière le passage de l'état liquide à l'état solide (heures, jours).

Mesure du temps de gel sur film polyester PET en couche mince

A partir d'un bain marie à 45°C préparé comme précédemment, on dépose la composition à tester sur un film de polyester. On étale la composition afin d'obtenir une couche d'environ 2 à 3 microns d'épaisseur. On examine au

cours du temps l'évolution de l'enduction par toucher au doigt et on note le temps correspondant à un toucher sec (= temps de polymérisation).

Les résultats des mesures sont donnés sur le tableau 1.

Les compositions sans amine donnent des résultats satisfaisants lorsque la solution de photoamorceur est préparée juste avant son utilisation. Dans le cas où cette solution n'est pas utilisée rapidement après préparation (exemples 2 et 8), les résultats des tests sont négatifs et ne permettent pas d'utiliser les compositions à réticuler dans des conditions adéquates pour permettre une réticulation contrôlée et contrôlable.

D'autre part, les résultats aux tests des compositions préparées en accord avec l'invention montrent que ces dernières sont utilisables même après un temps de stockage élevé.

De plus, il est à noter que les résultats les meilleurs sont obtenus avec les compositions contenant un agent aminé constitué par une amine encombrée stériquement. Pour ces compositions (exemples 5, 6, 9 et 10); le temps de gel VNC est inférieur à 1 minute, le temps de gel 45°C/noir est supérieur à 3 jours, et le temps de gel PET est supérieur à 24 heures; ce qui traduit un compromis stabilité et réactivité de très grande valeur.

TABLEAU 1

| Exemples | 1 | 2 | 3 | 4 | 5 | 6 | 7 | 8 | 9 | 10 |
|---|---|---|---|---|---|---|---|---|---|---|
| Rapport molaire Photoamorceur / Amine | 0 | 0 | 36 | 36 | 51 | 51 | 0 | 0 | 51 | 51 |
| Temps de gel VNC (mn) | 0.24 | 0.22 | 1.50 | 1.50 | 0.45 | 0.22 | 0.20 | 0.20 | 0.40 | 0.37 |
| Temps de gel à 45°C/noir | >24h | <3mn | >24h | >24h | >72h | >72h | >24h | <3mn | >72h | >72h |
| Temps de gel sur film PET/ noir | 20h | / | 20h | 20h | 26h | 25h | 20h | / | 26h | 24h |

## Revendications

1. Composition réticulable sous radiation à base d'au moins un polyorganosiloxane à groupements fonctionnels réticulables, de type époxy et/ou vinyléther, par voie cationique, **caractérisée en ce que** ladite composition comprend un agent aminé stabilisant, et un système amorceur de durcissement sous radiation, par activation photochimique, thermique et/ou sous faisceau d'électrons, choisi parmi les sels d'onium ; ladite composition étant stable à l'emploi et au stockage.

2. Composition stable réticulable sous radiation à base d'un polyorganosiloxane selon la revendication 1, **caractérisée en ce que** la composition est sous forme liquide homogène.

3. Composition stable réticulable selon l'une quelconque des revendications 1 ou 2, **caractérisée en ce que** l'agent aminé comporte au moins une amine dont le point d'ébullition est supérieur à 150°C et de préférence supérieur à 200°C.

4. Composition stable réticulable selon selon l'une quelconque des revendications 1 à 3, **caractérisée en ce que** l'amine ou les amines sont choisies parmi le groupe constitué de :

(1) une amine secondaire ou tertiaire de formule (VIII) :

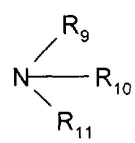

dans laquelle $R_9$, $R_{10}$, et $R_{11}$ sont identiques et/ou différents et choisis parmi le groupe constitué de :

- un radical monovalent alkyle, alkoxy ou alkylène, linéaire ou ramifié, contenant entre 1 à 12 atomes de carbone, et pouvant contenir et/ou être substitué par au moins un hétéroatome, de préférence un atome d'oxygène, de soufre ou d'azote,
- un radical monovalent cycloalkyle contenant entre 3 et 9 atomes de carbone et pouvant contenir et/ou être substitué par au moins un hétéroatome, de préférence un atome d'oxygène, de soufre ou d'azote, et

- un radical hydrogène.

(2) une amine cvclique encombrée stériquement de formule (IX):

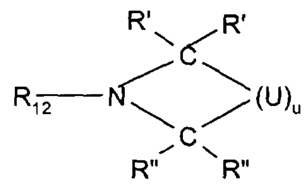

dans laquelle :

- $R_{12}$ correspond à $R_9$,
- R' et R" sont identiques ou différents et correspondent à un radical alkyle linéaire ou ramifié contenant entre 1 et 12 atomes de carbone, et pouvant contenir ou être substitué par au moins un hétéroatome, de préférence un atome d'oxygène, de soufre ou d'azote,
- U est une valence libre ou un radical méthylène, et u est compris entre 1 et 9 pour former un cycle pouvant :

  · contenir au moins un hétéroatome, de préférence un atome d'oxygène, de soufre ou d'azote, et/ou
  · être substitué par au moins un hétéroatome, un radical alkyle linéaire ou ramifié contenant 1 à 4 atomes, l'hétéroatome étant de préférence un atome d'oxygène, de soufre ou d'azote,

(3) une amine constituée de motifs de formule (VIII) et (IX) reliés entre eux par au moins un radical organique, saturé ou non saturé, au moins divalent $R_{13}$, pouvant contenir et/ou être substitué par un hétéroatome.

**5.** Composition stable réticulable selon la revendication 4, **caractérisée en ce que** l'amine est une amine cyclique stériquement encombrée comportant en $\alpha$ de l'atome d'azote des groupements alkyles de 1 à 4 atomes de carbone.

**6.** Composition stable réticulable selon la revendication 5, **caractérisée en ce que** l'amine stériquement encombrée est une amine contenant au moins un motif pypéridinyle.

**7.** Composition stable réticulable sous radiation à base d'un polyorganosiloxane selon l'une quelconque des revendications précédentes, **caractérisée en ce que** l'amorceur de durcissement comprend au moins un sel d'onium d'un élément des groupes 15 à 17 de la classification périodique dont l'entité cationique dudit sel d'onium est choisie parmi les sels d'onium de formule :

$$[(R^1)_n\text{- A -}(R^2)_m]^+ \qquad (I)$$

dans laquelle :

- A représente un élément des groupes 15 à 17 tel que I, S, Se, P et N,
- le symbole $R^1$ représente un radical aryle carbocyclique ou hétérocyclique en $C_6$-$C_{20}$, ledit radical hétérocyclique pouvant contenir comme hétéroéléments de l'azote et/ou du soufre,
- le symbole $R^2$ représente $R^1$, un radical alkyle, un alkényle linéaire ou ramifié contenant 1 à 30 atomes de carbone,
- lesdits radicaux $R^1$et $R^2$ étant éventuellement substitués par un groupement alcoxy contenant entre 1 à 25 atomes de carbone, un groupement alkyle contenant 1 à 25 atomes de carbone, un groupe nitro, un groupe chloro, un groupe bromo, un groupe cyano, un groupe carboxy et/ou un groupe mercapto,
- n est un nombre entier allant de 1 à v+1, v étant la valence de l'élément A,
- m est un nombre entier allant de 0 à v-1 avec n+m = v+1.

**8.** Composition stable réticulable sous radiation à base d'un polyorganosiloxane selon la revendication 7, **caractérisée en ce que** l'amorceur de durcissement comprend au moins un sel d'onium d'un élément des groupes 15 à 17 de la classification périodique dont l'entité anionique dudit sel d'onium est choisie parmi le groupe constitué de

$SbF_6$-, $BF_4$-, $PF_6$-, $CF_3SO_3$-, $B(O_3SCF_3)_4^-$, $B(O_3SC_2F_5)_4^-$, et $B(O_3SC_4F_9)_4^-$.

**9.** Composition stable réticulable sous radiation à base d'un polyorganosiloxane selon l'une quelconque des revendications 7 ou 8, **caractérisée en ce que** l'amorceur de durcissement comprend au moins un sel d'onium d'un élément des groupes 15 à 17 de la classification périodique dont l'entité anionique dudit sel d'onium est choisie parmi les entités anioniques borate de formule $[B\ X_a\ (R_4)_b]^-$ (II) dans laquelle :

- a est un nombre entier compris entre 0 et 3,
- b est un nombre entier compris entre 1 et 4 avec a + b = 4,
- les symboles X représentent :
  - un atome d'halogène, de préférence le chlore ou le fluor avec a = 0 à 3,
  - une fonction OH avec a = 0 à 2,
- les symboles $R_4$ sont identiques ou différents et représentent :
  - un radical phényle substitué par au moins un groupement électroattracteur, de préférence $CF_3$, $OCF_3$, $NO_2$, CN, ou par au moins 2 atomes d'halogène, de préférence le fluor, un radical aryle contenant au moins deux noyaux aromatiques tels que biphényle, naphtyle, éventuellement substitué par au moins un élément ou un
  - groupement électroattracteur, de préférence $CF_3$, $NO_2$, CN, ou un atome d'halogène, en particulier le fluor.

**10.** Composition selon l'une quelconque des revendications 8 à 9, **caractérisée en ce que** le sel d'onium est choisi parmi le groupe constitué de :
$[(\Phi\text{-}CH_3)_2I]^+$, $[B(C_6F_5)_4]^-$, $[(C_8H_{17}\text{-}O\text{-}\Phi\text{-}I\text{-}\Phi]^+$, $[B(C_6F_5)_4]^-$,
$[(C_{12}H_{25}\text{-}\Phi)_2I]^+$, $[B(C_6F_5)_4]^-$, $[CH_3\text{-}\Phi\text{-}I\text{-}\Phi\text{-}\ CH(CH_3)_2]^+$, $[B(C_6F_5)_4]$-,
$[CH_3\text{-}\Phi\text{-}I\text{-}\Phi\text{-}CH(CH_3)_2]^+$, $[B(C_6H_4OCF_3)_4]^-$ et
$2[B(C_6F_5)_4]^-$, $[(\Phi)_2S\text{-}\Phi\text{-}S\text{-}\Phi\text{-}S(\Phi)_2]^{+2}$.

**11.** Composition selon l'une quelconque des revendications précédentes, **caractérisée en ce que** ledit polyorganosiloxane est linéaire ou sensiblement linéaire et constitué de motifs de formule (V) et terminé par des motifs de formule (VI) ou cycliques constitués de motifs de formule (V) :

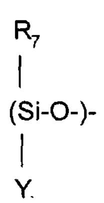 (V) 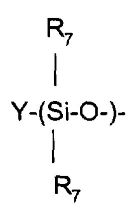 (VI)

dans lesquelles :

- les symboles $R_7$ sont semblables ou différents et représentent :
  - un radical alkyle linéaire ou ramifié contenant 1 à 8 atomes de carbone,
  - éventuellement substitué par au moins un halogène, de préférence le fluor, les
  - radicaux alkyles étant de préférence méthyle, éthyle, propyle, octyle et 3,3,3-trifluoropropyle,
  - un radical cycloalkyle contenant entre 5 et 8 atomes de carbone cycliques,
  - éventuellement substitué,
  - un radical aryle contenant entre 6 et 12 atomes de carbone pouvant être
  - substitué, de préférence phényle ou dichlorophényle,
  - une partie aralkyle ayant une partie alkyle contenant entre 1 et 4 atomes de
  - carbone et une partie aryle contenant entre 6 et 12 atomes de carbone,
  - substituée éventuellement sur la partie aryle par des halogènes, des alkyles
  - et/ou des alkoxyles contenant 1 à 3 atomes de carbone.
- les symboles Y sont semblables ou différents et représentent :

- le groupement $R_7$, un radical hydrogène et/ou
- un groupement organofonctionnel réticulable par voie cationique, de préférence
- un groupement époxyfonctionnel et/ou vinyloxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
- et l'un au moins des symboles Y représentant un groupement organique fonctionnel réticulable par voie cationique.

**12.** Composition selon la revendication 11, **caractérisée en ce que** ledit polyorganosiloxane présente une viscosité à 25°C de l'ordre de 10 à 10.000 $mm^2/s$.

**13.** Procédé de préparation de composition réticulable selon l'une quelconque des revendications précédentes, **caractérisé en ce que** le procédé comprend les étapes suivantes :

a) mélanger un agent aminé au polyorganosiloxane pour former une première composition stabilisée,
b) ajouter ensuite une seconde composition miscible comprenant l'amorceur de durcissement pour former ladite composition réticulable.

**14.** Procédé de préparation de composition réticulable selon la revendication 13, **caractérisé en ce que** la seconde composition est sous forme liquide, l'amorceur de durcissement étant solubilisé en option dans un solvant compatible au polyorganosiloxane.

**15.** Procédé de préparation d'articles à surface non-adhérente, **caractérisé en ce que** ledit procédé comprend les étapes suivantes :

a) appliquer entre 0,1 et 5 g par $m^2$ de la surface dudit article de composition selon l'une quelconque des revendications 1 à 12,
b) réticuler ladite composition par apport d'énergie dont au moins une partie est fournie par un rayonnement U.V..

**16.** Procédé selon la revendication 15, **caractérisé en ce que** l'opération de réticulation est réalisée par un rayonnement U.V. de longueur d'onde de l'ordre de 200 à 400 namomètres.

**17.** Utilisation des composés selon l'une des revendications 1 à 12 pour la réalisation de revêtements anti-adhérents.

**18.** Revêtement anti-adhérent susceptible d'être obtenu par le procédé tel que défini à l'une quelconque des revendications 13 à 16.

**19.** Article à surface anti-adhérente susceptible d'être obtenu par le procédé tel que défini à l'une quelconque des revendications 13 à 16.

**20.** Utilisation d'au moins une amine pour la préparation de composition stable au stockage selon l'une quelconque des revendications 1 à 12.

**21.** Utilisation selon la revendication précédente **caractérisée en ce que** la stabilisation est effectuée par neutralisation des traces d'acides, provenant notamment du photoamorceur.

## Patentansprüche

**1.** Unter Bestrahlung vernetzbare Zusammensetzung auf der Basis mindestens eines Polyorganosiloxans mit kationisch vernetzbaren funktionellen Gruppierungen vom Typ Epoxy und/oder Vinylether, **dadurch gekennzeichnet, dass** die Zusammensetzung einen Aminstabilisator und ein Startersystem der Härtung unter Bestrahlung, durch photochemische, thermische und/oder Elektronenstrahlaktivierung ausgewählt aus Oniumsalzen umfasst, wobei die Zusammensetzung bei Gebrauch und bei Lagerung stabil ist.

**2.** Unter Bestrahlung vernetzbare stabile Zusammensetzung auf der Basis eines Polyorganosiloxans nach Anspruch 1, **dadurch gekennzeichnet, dass** die Zusammensetzung in Form einer homogenen Flüssigkeit vorliegt.

3. Vernetzbare stabile Zusammensetzung nach einem der Ansprüche 1 oder 2, **dadurch gekennzeichnet, dass** das Aminmittel mindestens ein Amin umfasst, dessen Siedepunkt über 150°C und bevorzugt über 200°C liegt.

4. Vernetzbare stabile Zusammensetzung nach Anspruch 3, **dadurch gekennzeichnet, dass** das Amin oder die Amine ausgewählt ist/sind aus der Gruppe:

(1) sekundäres oder tertiäres Amin der Formel (VIII)

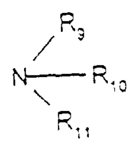

worin $R_9$, $R_{10}$ und $R_{11}$ gleich und/oder verschieden sind und ausgewählt sind aus der Gruppe

- linearer oder verzweigter einwertiger Alkyl-, Alkoxy- oder Alkylenrest mit 1 bis 12 Kohlenstoffatomen, der mindestens ein Heteroatom, bevorzugt ein Sauerstoff-, Schwefel- oder Stickstoffatom enthalten kann und/oder dadurch substituiert sein kann ,
- einwertiger Cycloalkylrest mit 3 bis 9 Kohlenstoffatomen, der mindestens ein Heteroatom, bevorzugt ein Sauerstoff-, Schwefel- oder Stickstoffatom enthalten kann und/oder dadurch substituiert sein kann ,
- Wasserstoffrest

(2) Cyclisches sterisch gehindertes Amin der Formel (IX)

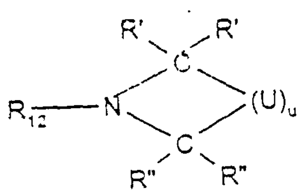

worin :

- $R_{12}$ $R_9$ entspricht,
- R' und R'' gleich oder verschieden sind und einem linearen oder verzweigten Alkylrest mit 1 bis 12 Kohlenstoffatomen entsprechen, der mindestens ein Heteroatom, bevorzugt ein Sauerstoff-, Schwefel- oder Stickstoffatom enthalten kann und/oder dadurch substituiert sein kann,
- U eine freie Valenz oder ein Methylenrest ist, und u einen Wert zwischen 1 und 9 besitzt, um einen Zyklus zu bilden, der

  . mindestens ein Heteroatom, bevorzugt ein Sauerstoff-, Schwefel- oder Stickstoffatom enthalten kann, und/oder
  . durch mindestens ein Heteroatom, einen linearen oder verzweigten Alkylrest mit 1 bis 4 Atomen substituiert sein kann, wobei das Heteroatom, bevorzugt ein Sauerstoff-, Schwefel- oder Stickstoffatom ist,

(3) Amin, bestehend aus den Motiven der Formel (VIII) und (IX), die unter einander durch mindestens einen gesättigten oder ungesättigten, zumindest zweiwertigen organischen Rest $R_{13}$ verbunden sind, der ein Heteroatom enthalten kann und/oder dadurch substituiert sein kann.

5. Vernetzbare stabile Zusammensetzung nach Anspruch 4, **dadurch gekennzeichnet, dass** das Amin ein cyclisches sterisch gehindertes Amin ist, das in Position $\alpha$ des Stickstoffatoms Alkylgruppen mit 1 bis 4 Kohlenstoffatomen trägt.

6. Vernetzbare stabile Zusammensetzung nach Anspruch 5, **dadurch gekennzeichnet, dass** das sterisch gehinderte Amin ein Amin mit mindestens einem Piperidinylmotiv ist.

**7.** Unter Bestrahlung vernetzbare stabile Zusammensetzung auf der Basis eines Polyorganosiloxans nach einem der vorstehenden Ansprüche, **dadurch gekennzeichnet, dass** Starter für die Härtung mindestens ein Oniumsalz eines Elements der Gruppen 15 bis 17 des Periodensystems umfasst, wobei die kationische Einheit des Oniumsalzes ausgewählt ist aus Oniumsalzen der Formel

$$[(R^1)_n\text{-}A\text{-}(R^2)_m]^+ \qquad (I)$$

worin:

- A ein Element der Gruppen 15 bis 17 wie I, S, Se, P und N bezeichnet,
- das Symbol $R^1$ einen carbocyclischen oder heterocyclischen $C_{6\text{-}20}$-Arylrest bezeichnet, wobei der heterocyclische Rest als Heteroelemente Stickstoff und/oder Schwefel enthalten kann,
- das Symbol $R^2$ $R^1$, einen linearen oder verzweigten Alkyl, Alkenylrest mit 1 bis 30 Kohlenstoffatomen bezeichnet,
- die Reste $R^1$ und $R^2$ gegebenenfalls durch einen Alkoxyrest mit 1 bis 25 Kohlenstoffatomen, einen Alkylrest mit 1 bis 25 Kohlenstoffatomen, eine Nitrogruppe, eine Chlorgruppe, eine Bromgruppe, eine Cyanogruppe, eine Carboxy- und/oder Mercaptogruppe substituiert sind,
- n eine ganze Zahl von 1 bis v + 1 ist, wobei v die Wertigkeit des Elements A ist,
- m eine ganze Zahl von 0 bis v-1 ist, wobei n + m = v + 1.

**8.** Unter Bestrahlung vernetzbare stabile Zusammensetzung auf der Basis eines Polyorganosiloxans nach Anspruch 7, **dadurch gekennzeichnet, dass** der Starter für die Härtung mindestens ein Oniumsalz eines Elements der Gruppe 15 bis 17 des Periodensystems umfasst, dessen anionische Einheit des Oniumsalzes ausgewählt ist aus der Gruppe $SbF_6$-, $BF_4$-, $PF_6$-, $CF_3SO_3$-, $B(O_3SCF_3)_4$-, $B(O_3SC_2F_5)_4$- und $B(C_3SC_4F_9)_4$-.

**9.** Unter Bestrahlung vernetzbare stabile Zusammensetzung auf der Basis eines Polyorganosiloxans nach einem der Ansprüche 7 oder 8, **dadurch gekennzeichnet, dass** der Starter für die Härtung mindestens ein Oniumsalz eines Elements der Gruppen 15 bis 17 des Periodensystems umfasst, wobei die anionische Einheit des Oniumsalzes ausgewählt ist aus anionischen Borateinheiten der Formel $[B\,X_a\,(R_4)_b]^-$ (II), worin:

- a eine ganze Zahl zwischen 0 und 3 ist,
- b eine ganze Zahl zwischen 1 und 4 ist, wobei a + b = 4,
- die Symbole X bezeichnen:
  - . ein Halogenatom, bevorzugt Chlor oder Fluor, wobei a = 0 bis 3,
  - . eine OH-Funktion, wobei a = 0 bis 2,
- die Symbole $R_4$ gleich oder verschieden sind und bezeichnen:
  - . einen Phenylrest, substituiert durch mindestens eine elektronenanziehende Gruppe, bevorzugt $CF_3$, $OCF_3$, $NO_2$, CN oder durch mindestens 2 Halogenatome, bevorzugt Fluor,
  - . einen Arylrest mit mindestens zwei aromatischen Kernen, wie Biphenyl, Naphthyl, gegebenenfalls substituiert durch mindestens ein Element oder eine elektronenanziehende Gruppierung, bevorzugt $CF_3$, $NO_2$, CN oder durch ein Halogenatom, insbesondere Fluor.

**10.** Zusammensetzung nach einem der Ansprüche 8 bis 9, **dadurch gekennzeichnet, dass** das Oniumsalz ausgewählt ist aus der Gruppe bestehend aus:
$[(\Phi\text{-}CH_3)_2\,I]^+$, $[B(C_6F_5)_4]^-$, $[(C_8H_{17}\text{-}O\text{-}\Phi\text{-}I\text{-}\Phi]^+$, $[B(C_6F_5)_4]^-$,
$[(C_{12}H_{25}\text{-}\Phi)_2I]^+$, $[B(C_6F_5)_4]^-$, $[CH_3\text{-}\Phi\text{-}I\text{-}\Phi\text{-}\,CH(CH_3)_2]^+$, $[B(C_6F_5)_4]$-,
$[CH_3\text{-}\Phi\text{-}I\text{-}\Phi\text{-}CH(CH_3)_2]^+$, $[B(C_6H_4OCF_3)_4]^-$ und
$2[B(C_6F_5)_4]^-$,$[(\Phi)_2S\text{-}\Phi\text{-}S\text{-}\Phi\text{-}S(\Phi)_2]^{+2}$.

**11.** Zusammensetzung nach einem der vorstehenden Ansprüche, **dadurch gekennzeichnet, dass** das Polyorganosiloxan linear oder im Wesentlichen linear ist und aus Motiven der Formel (V) besteht und durch Motive der Formel

(VI) oder cyclische Bestandteile der Motive der Formel (V) terminiert ist:

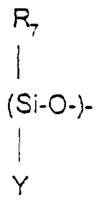 (V) 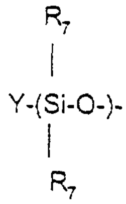 (VI)

worin

- die Symbole $R_7$ gleich oder verschieden sind und bedeuten:
  - . einen linearen oder verzweigten Alkylrest mit 1 bis 8 Kohlenstoffatomen, gegebenenfalls substituiert durch mindestens ein Halocen, bevorzugt Fluor, wobei die Alkylreste bevorzugt Methyl, Ethyl, Propyl, Octyl und 3,3,3-Trifluorpropyl sind,
  - . einen Cycloalkylrest mit 5 bis 8 cyclisch vorhandenen Kohlenstoffatomen, gegebenenfalls substituiert,
  - . einen Arylrest mit 6 bis 12 Kohlenstoffatomen, gegebenenfalls substituiert, bevorzugt Phenyl oder Dichlorphenyl,
  - . einen Aralkylteil mit einem Alkylteil mit 1 bis 4 Kohlenstoffatomen und einem Arylteil mit 6 bis 12 Kohlenstoffatomen, substituiert gegebenenfalls am Arylteil durch Halogene, Alkyle und/oder Alkoxyle mit 1 bis 3 Kohlenstoffatomen,
- die Symbole Y gleich oder verschieden sind und bedeuten:
  - . eine Gruppierung $R_7$, einen Wasserstoffrest und/oder
  - . eine kationisch vernetzbare organofunktionelle Gruppierung, bevorzugt eine epoxyfunktionelle und/oder vinyloxyfunktionelle Gruppierung, gebunden an Silicium des Polyorganosiloxans über einen zweiwertigen Rest mit 2 bis 20 Kohlenstoffatomen und gegebenenfalls mit mindestens einem Heteroatom, bevorzugt Sauerstoff,
  - . und wobei mindestens eines der Symbole Y eine kationisch vernetzbare organofunktionelle Gruppierung bedeutet.

**12.** Zusammensetzung nach Anspruch 11, **dadurch gekennzeichnet, dass** das Polyorganosiloxan eine Viskosität im Bereich von 10 bis 10.000 $mm^2/s$ bei 25°C besitzt.

**13.** Verfahren zur Herstellung einer vernetzbaren Zusammensetzung nach einem der vorstehenden Ansprüche, **dadurch gekennzeichnet, dass** das Verfahren die folgenden Stufen umfasst:

a) Vermischen eines Aminmittels mit dem Polyorganosiloxan zur Bildung einer ersten stabilisierten Zusammensetzung,
b) anschließende Zugabe einer zweiten mischbaren Zusammensetzung, umfassend den Starter für die Härtung zur Bildung der vernetzbaren Zusammensetzung.

**14.** Verfahren zur Herstellung einer vernetzbaren Zusammensetzung nach Anspruch 13, **dadurch gekennzeichnet, dass** die zweite Zusammensetzung in flüssiger Form vorliegt, der Starter der Härtung zusätzlich in einem mit dem Polyorganosiloxan kompatiblen Lösungsmittel solubilisiert ist.

**15.** Verfahren zur Herstellung von Artikeln mit nicht haftender Oberfläche, **dadurch gekennzeichnet, dass** das Verfahren die folgenden Stufen umfasst:

a) Aufbringen von 0,1 bis 5 g pro $m^2$ der Oberfläche des Artikels der Zusammensetzung nach einem der Ansprüche 1 bis 12,
b) Vernetzen der Zusammensetzung durch Zuführen von Energie, wobei mindestens ein Teil durch UV-Bestrahlung geliefert wird.

**16.** Verfahren nach Anspruch 15, **dadurch gekennzeichnet, dass** der Arbeitsschritt der Vernetzung durch UV-Bestrahlung mit einer Wellenlänge im Bereich von 200 bis 400 nm durchgeführt wird.

**17.** Verwendung einer Zusammensetzung nach einem der Ansprüche 1 bis 12 zur Herstellung von nicht haftenden Überzügen.

**18.** Nicht haftender Überzug, der nach einem Verfahren nach einem der Ansprüche 13 bis 16 erhalten werden kann.

**19.** Artikel mit nicht haftender Oberfläche, der nach einem Verfahren nach einem der Ansprüche 13 bis 16 erhalten werden kann.

**20.** Verwendung mindestens eines Amins zur Herstellung einer lagerstabilen Zusammensetzung nach einem der Ansprüche 1 bis 12.

**21.** Verwendung nach dem vorstehenden Anspruch, **dadurch gekennzeichnet, dass** die Stabilisierung durch Neutralisation von Säurespuren, die insbesondere aus dem Photostarter stammen, durchgeführt wird.

**Claims**

**1.** Composition which is crosslinkable under radiation, based on at least one polyorganosiloxane containing cationically crosslinkable functional groups of epoxy and/or vinyl ether type, **characterized in that** the said composition comprises a stabilizing amino agent and an initiator system for curing under radiation, by photochemical or thermal activation and/or with a beam of electrons, this initiator system being chosen from onium salts; the said composition being stable during use and on storage.

**2.** Stable composition which is crosslinkable under radiation, based on a polyorganosiloxane according to Claim 1, **characterized in that** the composition is in homogeneous liquid form.

**3.** Stable crosslinkable composition according to either of Claims 1 and 2, **characterized in that** the amino agent contains at least one amine whose boiling point is greater than 150°C and preferably greater than 200°C.

**4.** Stable crosslinkable composition according to Claim 3, **characterized in that** the amine (s) is(are) chosen from the group consisting of:

(1) a secondary or tertiary amine of formula (VIII):

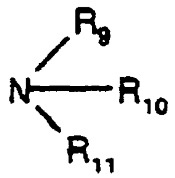

in which $R_9$, $R_{10}$ and $R_{11}$ are identical and/or different and chosen from the group consisting of:

- a linear or branched monovalent alkyl, alkoxy or alkylene radical containing between 1 and 12 carbon atoms, and possibly containing and/or being substituted with at least one hetero atom, preferably an oxygen, sulphur or nitrogen atom,
- a monovalent cycloalkyl radical containing between 3 and 9 carbon atoms and possibly containing and/or being substituted with at least one hetero atom, preferably an oxygen, sulphur or nitrogen atom, and
- a hydrogen radical,

(2) a sterically hindered cyclic amine of formula (IX) :

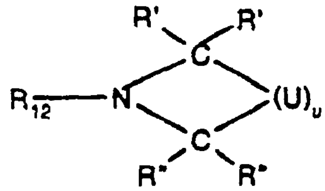

in which:

- $R_{12}$ corresponds to $R_9$,
- R' and R" are identical or different and correspond to a linear or branched alkyl radical containing between 1 and 12 carbon atoms and possibly containing or being substituted with at least one hetero atom, preferably an oxygen, sulphur or nitrogen atom,
- U is a free valency or a methylene radical, and u is between 1 and 9, in order to form a ring which can:
    - contain at least one hetero atom, preferably an oxygen, sulphur or nitrogen atom, and/or
    - be substituted with at least one hetero atom, a linear or branched alkyl radical containing 1 to 4 atoms, the hetero atom preferably being an oxygen, sulphur or nitrogen atom,

(3) an amine consisting of units of formula (VIII) and (IX) linked together by at least one saturated or unsaturated, at least divalent, organic radical $R_{13}$, possibly containing and/or being substituted with a hetero atom.

**5.** Stable crosslinkable composition according to Claim 4, **characterized in that** the amine is a sterically hindered cyclic amine containing, $\alpha$ to the nitrogen atom, alkyl groups of 1 to 4 carbon atoms.

**6.** Stable crosslinkable composition according to Claim 5, **characterized in that** the sterically hindered amine is an amine containing at least one piperidyl unit.

**7.** Stable composition which is crosslinkable under radiation, based on a polyorganosiloxane according to any one of the preceding claims, **characterized in that** the curing initiator comprises at least one onium salt of an element from groups 15 to 17 of the Periodic Table, in which the cationic species of the said onium salt is chosen from the onium salts of formula:

$$[(R_1)_n\text{-}A\text{-}(R_2)_m]^+ \qquad (I)$$

in which:

- A represents an element from groups 15 to 17, such as I, S, Se, P and N,
- the symbol $R_1$ represents a $C_6$-$C_{20}$ carbocyclic or heterocyclic aryl radical, it being possible for the said heterocyclic radical to contain as hetero elements nitrogen and/or sulphur,
- the symbol $R_2$ represents $R_1$, a linear or branched alkyl or alkenyl radical containing 1 to 30 carbon atoms,
- the said radicals $R_1$ and $R_2$ optionally being substituted with an alkoxy group containing between 1 and 25 carbon atoms, an alkyl group containing 1 to 25 carbon atoms, a nitro group, a chloro group, a bromo group, a cyano group, a carboxyl group and/or a mercapto group,
- n is an integer ranging from 1 to v+1, v being the valency of the element A,
- m is an integer ranging from 0 to v-1, with n+m = v+1.

**8.** Stable composition which is crosslinkable under radiation, based on a polyorganosiloxane according to Claim 7, **characterized in that** the curing initiator comprises at least one onium salt of an element from groups 15 to 17 of the Periodic Table, in which the anionic species of the said onium salt is chosen from the group consisting of $SbF_6^-$, $BF_4^-$, $PF_6^-$, $CF_3SO_3^-$, $B(O_3SCF_3)_4^-$, $B(O_3SC_2F_5)_4^-$ and $B(O_3SC_4F_9)_4^-$.

**9.** Stable composition which is crosslinkable under radiation, based on a polyorganosiloxane according to either of Claims 7 and 8, **characterized in that** the curing initiator comprises at least one onium salt of an element from groups 15 to 17 of the Periodic Table, in which the anionic species of the said onium salt is chosen from the anionic

borate species of formula $[BX_a(R_4)_b]^-$ (II), in which:

- a is an integer between 0 and 3,
- b is an integer between 1 and 4, with a + b = 4,
- the symbols X represent:
  - a halogen atom, preferably chlorine or fluorine, with a = 0 to 3,
  - an OH function with a = 0 to 2,
- the symbols $R_4$ are identical or different and represent:
  - a phenyl radical substituted with at least one electron-withdrawing group, preferably $CF_3$, $OCF_3$, $NO_2$ or CN, or with at least 2 halogen atoms, preferably fluorine,
  - an aryl radical containing at least two aromatic rings, such as biphenyl or naphthyl, optionally substituted with at least one electron-withdrawing element or group, preferably $CF_3$, $NO_2$ or CN or a halogen atom, in particular fluorine.

**10.** Composition according to either of Claims 8 and 9, **characterized in that** the onium salt is chosen from the group consisting of:
$[(\Phi\text{-}CH_3)_2\ I]^+$, $[B(C_6F_5)_4]^-$, $[(C_8H_{17}\text{-}O\text{-}\Phi\text{-}I\text{-}\Phi]^+$, $[B(C_6F_5)_4]^-$,
$[(C_{12}H_{25}\text{-}\Phi)_2I]^+$, $[B(C_6F_5)_4]^-$, $[CH_3\text{-}\Phi\text{-}I\text{-}\Phi\text{-}CH(CH_3)_2]^+$, $[B(C_6F_5)_4]^-$,
$[CH_3\text{-}\Phi\text{-}I\text{-}\Phi\text{-}CH(CH_3)_2]^+$, $[B(C_6H_4OCF_3)_4]^-$ and
$2[B(C_6F_5)_4]^-$, $[(\Phi)_2S\text{-}\Phi\text{-}S\text{-}\Phi\text{-}S(\Phi)_2]^{+2}$.

**11.** Composition according to any one of the preceding claims, **characterized in that** the said polyorganosiloxane is linear or substantially linear and consists of units of formula (V) and ends with units of formula (VI), or is cyclic and consists of units of formula (V):

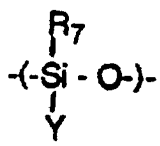
(V)

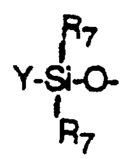
(VI)

in which:

- the symbols $R_7$ are identical or different and represent:
  - a linear or branched alkyl radical containing 1 to 8 carbon atoms, optionally substituted with at least one halogen, preferably fluorine, the alkyl radicals preferably being methyl, ethyl, propyl, octyl and 3,3,3-trifluoropropyl,
  - a cycloalkyl radical containing between 5 and 8 cyclic carbon atoms, which is optionally substituted,
  - an aryl radical containing between 6 and 12 carbon atoms, which may be substituted, preferably phenyl or dichlorophenyl,
  - an aralkyl part having an alkyl part containing between 1 and 4 carbon atoms and an aryl part containing between 6 and 12 carbon atoms, optionally substituted on the aryl part with halogens, alkyls and/or alkoxys containing 1 to 3 carbon atoms,
- the symbols Y are identical or different and represent:
  - the group $R_7$, a hydrogen radical and/or
  - a cationically crosslinkable organofunctional group, preferably an epoxy functional and/or vinyloxy functional group, connected to the silicon of the polyorganosiloxane via a divalent radical containing from 2 to 20 carbon atoms and possibly containing at least one hetero atom, preferably oxygen, and
  - at least one of the symbols Y representing a cationically crosslinkable functional organic group.

**12.** Composition according to Claim 11, **characterized in that** the said polyorganosiloxane has a viscosity at 25°C of from about 10 to 10,000 $mm^2/s$.

**13.** Process for preparing a crosslinkable composition according to any one of the preceding claims, **characterized in that** the process comprises the following steps:

a) mixing an amino agent with the polyorganosiloxane in order to form a first stabilized composition,
b) next, adding a second miscible composition comprising the curing initiator in order to form the said crosslinkable composition.

**14.** Process for preparing a crosslinkable composition according to Claim 13, **characterized in that** the second composition is in liquid form, the curing initiator optionally being dissolved in a solvent which is compatible with the polyorganosiloxane.

**15.** Process for preparing articles with a non-adherent surface, **characterized in that** the said process comprises the following steps:

a) applying between 0.1 and 5 g, per $m^2$ of the surface of the said article, of composition according to any one of Claims 1 to 12,
b) crosslinking the said composition by providing energy, at least some of which is supplied by UV radiation.

**16.** Process according to Claim 15, **characterized in that** the crosslinking operation is carried out by UV radiation of wavelength from about 200 to 400 nanometres.

**17.** Use of the compounds according to one of Claims 1 to 12 for the preparation of anti-adherent coatings.

**18.** Anti-adherent coating which can be obtained by the process as defined in any one of Claims 13 to 16.

**19.** Article with an anti-adherent surface which can be obtained by the process as defined in any one of Claims 13 to 16.

**20.** Use of at least one amine for the preparation of a composition which is stable on storage according to any one of Claims 1 to 12.

**21.** Use according to the preceding claim, **characterized in that** the stabilization is carried out by neutralizing traces of acids, derived in particular from the photoinitiator.